# FASCICULE DE BREVET EUROPEEN

(11) **EP 3 223 108 B1**
(45) Date de publication et mention de la délivrance du brevet: **06.03.2019**
(21) Numéro de dépôt: 17161848.1
(22) Date de dépôt: 20.03.2017
(51) Int. Cl.: F24F 11/62

(54) **PROCÉDÉ POUR LA RÉGULATION DE LA TEMPÉRATURE D'UN LOCAL À PIÈCES MULTIPLES PAR UN SYSTÈME CLIMATIQUE ET SYSTÈME CLIMATIQUE METTANT EN OEUVRE UN TEL PROCÉDÉ**
VERFAHREN FÜR DIE REGULIERUNG DER TEMPERATUR EINES ORTES MIT MEHREREN RÄUMEN ÜBER EIN KLIMASYSTEM, UND KLIMASYSTEM, BEI DEM DIESES VERFAHREN ZUR ANWENDUNG KOMMT
METHOD FOR CONTROLLING THE TEMPERATURE OF A PREMISES WITH MULTIPLE ROOMS BY A CLIMATE SYSTEM AND CLIMATE SYSTEM IMPLEMENTING SUCH A METHOD

(30) Priorité: 21.03.2016 FR 1652423
(43) Date de publication de la demande: 27.09.2017
(73) Titulaire: MULLER ET CIE, 75018 Paris (FR)
(72) Inventeur: FREPPEL, Wirich, 75018 Paris (FR); MORARD, Jean-Louis, 75018 Paris (FR)
(74) Mandataire: Lavoix

(56) Documents cités:
- FR-A1- 2 982 346
- US-A1- 2012 065 783
- US-A1- 2012 066 168
- US-A1- 2012 259 469
- US-A1- 2014 303 789

## Description

L'invention concerne un procédé pour la régulation de la température d'un local à pièces multiples par un système climatique et un système climatique mettant en oeuvre un tel procédé.

L'invention appartient au domaine des systèmes climatiques mettant en oeuvre des appareils de chauffage ou de climatisation dans un local à vocation industrielle ou d'habitation.

La régulation thermique d'un local, assurant la température idéale dudit local quelques soient les conditions climatiques et les conditions de son utilisation est un élément essentiel, tant du confort thermique ressenti par les occupants dudit local que de la consommation énergétique de celui-ci. Une régulation thermique optimale d'un système climatique permet d'assurer un confort thermique optimal des occupants du local et une consommation énergétique minimale. En effet, la régulation thermique est spécifique à chaque pièce, et dépend notamment, de son utilisation fonctionnelle (salle de bain, chambre, salon, etc.), de ses dimensions, de la position de l'appareil dans la pièce, de l'éventuel vitrage et de son orientation, de la nature des murs et des cloisons délimitant ladite pièce, et de la régulation thermique des pièces adjacentes, sans que cette liste ne soit ni limitative ni exhaustive.

Selon l'art antérieur la puissance des appareils climatiques installés dans un local est calculée en fonction de la déperdition énergétique dudit local et en fonction d'informations climatiques historiques relatives audit local. Par exemple, s'agissant d'un chauffage, celui-ci est dimensionné en fonction d'un indice de performance énergétique du logement, du volume chauffé et de la température la plus basse enregistrée au cours des vingt années précédentes. Ces informations permettent d'assurer que la puissance installée, permettra effectivement de chauffer le logement jusqu'à une température de confort, par exemple 20° C, quelques soient les conditions climatiques même extrêmes. Un thermostat permet à l'utilisateur de fixer la température ambiante désirée sous la forme d'une consigne, et une sonde de température judicieusement placée permet de comparer cette température de consigne avec la température ambiante, le taux de charge de l'appareil climatique, c'est-à-dire la proportion de temps pendant lequel l'appareil climatique fonctionne, est calculé en fonction de l'écart entre la consigne et la température mesurée par la sonde, réalisant ainsi une régulation globale autour d'une température moyenne de confort fixée par le thermostat.

Le document WO2009/133283 décrit un tel procédé perfectionné de régulation du taux de charge d'un appareil climatique en fonction d'une consigne.

Le document FR 3 008 501 décrit un procédé de régulation d'un appareil climatique en présence d'une ouverture de fenêtre.

Le document FR 2 982 346 décrit un appareil climatique, apte à adapter ses conditions de fonctionnement en fonction de l'utilisation effective de la pièce d'habitation dans laquelle il est installé.

Les documents US2012259469, US2012065783, US2012066168 et US20140303789 décrivent également des systèmes climatiques et des procédés de régulation associés.

Ainsi, il existe selon l'art antérieur des exemples de régulation thermique sophistiqués d'un appareil climatique prenant en compte une pluralité de paramètres pour essayer d'apporter un confort thermique optimal à leur utilisateur.

Ces dispositifs et procédés de l'art antérieur s'adressent au pilotage d'un appareil climatique, ceci en fonction d'une dizaine de paramètres identifiés. Cependant, pour assurer en tout point du local, notamment dans toutes ses pièces une régulation assurant à la fois confort et économie d'énergie, le nombre de paramètres augmente dramatiquement, et la régulation doit prendre en compte non seulement une dizaine de paramètres par pièce dudit local mais aussi les interactions entre ces pièces ainsi qu'entre ces pièces et l'extérieur du local. Par exemple, le rayonnement solaire implique souvent une température élevée dans une pièce et qui n'est pas anticipée par l'appareil climatique, ou encore, une pièce contenant des systèmes climatiques, ou d'autres sources, dissipant de l'énergie telles qu'un four, un sèche-linge ou une imprimante, et fonctionnant par intermittence, influent sur la régulation des pièces adjacentes, qui est ainsi perturbé. Le nombre de paramètres à prendre en compte du fait de ces interactions atteint rapidement des niveaux très élevés.

L'invention vise à optimiser la consommation énergétique d'un système climatique en dépensant l'énergie juste nécessaire au confort de chaque pièce d'un local en fonction de son occupation effective. Pour atteindre cet objectif, il est nécessaire d'anticiper le comportement thermique du bâtiment.

L'invention concerne à cette fin un procédé pour la régulation thermique, en regard d'une consigne de température, d'un système climatique comprenant une pluralité d'appareils climatiques dans un local comprenant plusieurs pièces, en présence d'une modification de la consigne de température dans l'une desdites pièces, lequel procédé comprend les étapes décrites dans la revendication 1.

Ainsi, le procédé objet de l'invention utilise une intelligence centralisée, sous la forme d'un modèle de comportement afin d'anticiper la réponse thermique du local et considère la réponse globale dudit local pour le pilotage de l'ensemble des appareils climatiques du système climatique vis-à-vis d'une modification de consigne dans une seule pièce, là où les systèmes et procédés de l'art antérieur se contentent du pilotage uniquement de l'appareil climatique présent dans cette pièce.

L'invention est avantageusement mise en oeuvre selon les modes de réalisation et les variantes exposés ci-après, lesquels sont à considérer individuellement ou selon toute combinaison techniquement opérante.

Avantageusement, le système climatique comprend des moyens de détection de présence dans une des pièces du local, dite pièce surveillée, et qui comporte les étapes f) et g) décrites dans la revendication 1.

La température de confort correspond à la température de confort ressentie par les occupants. De manière générale, il s'agit de la température ambiante désirée par les occupants dans la pièce. La notion de confort thermique se définit comme une sensation de bien-être éprouvée par les occupants dans la pièce à la température de confort.

Ainsi, le procédé objet de l'invention permet d'adapter la température dans une pièce inoccupée et par suite de réduire la consommation énergétique en maîtrisant les conséquences de cette modification de température sur le confort des autres pièces. La température réduite s'entend d'une température de consommation réduite. Elle est plus basse que la température de confort dans le cas où le système climatique est essentiellement un système de chauffage, elle est plus haute que la température de confort dans le cas où le système climatique est essentiellement un système de climatisation.

Avantageusement, le système climatique comprend un module de calcul mettant en oeuvre un modèle adapté inverse et comprenant les étapes h) et i) décrites dans la revendication 1.

Ainsi, le procédé objet de l'invention anticipe les périodes de présence de sorte que la pièce soit à la température de confort au moment où l'utilisateur rejoint la pièce surveillée.

Avantageusement, le calendrier obtenu à l'étape f) comporte un calendrier prédéterminé et un calendrier obtenu par apprentissage à partir des informations délivrées par les moyens de détection de présence dans la pièce surveillée. Ainsi, le système climatique objet de l'invention s'adapte aux habitudes de l'utilisateur et anticipe son comportement.

Selon un exemple de réalisation, les moyens de détection de présence du système objet de l'invention comprennent, seuls ou en combinaison, un détecteur de mouvement, un détecteur CO2, un capteur sonore, un capteur de vibration, une caméra numérique, un bouton d'indication de présence. Ainsi, la collecte des informations d'occupation est adaptée à la nature de la pièce surveillée. Par exemple pour une salle de conférence, la présence est préférentiellement détectée par la mesure du CO2 ou un capteur sonore, alors que pour une chambre d'hôtel la présence est préférentiellement détectée par un détecteur de mouvement.

Avantageusement, le système climatique comprend des moyens de connexion à un service de météorologie et comprend les étapes consistant à :
j. obtenir une prévision météorologique ;
dans lequel l'étape b) comprend la prise en compte de l'information obtenue à l'étape j).

Ainsi, les variations des conditions météorologiques et leur incidence sur la réponse thermique du bâtiment comprenant le local sont prises en compte dans l'élaboration du modèle adapté et par suite du modèle adapté inverse.

Selon ce dernier mode de réalisation, les étapes h) et i) comprennent avantageusement la prise en compte de l'évolution des conditions météorologiques définies à l'étape j).

Avantageusement, le modèle initial et le modèle adapté comprennent le calcul de la consommation énergétique du système climatique, et qu'il comprend une étape consistant à :
k. calculer une température réduite pour la pièce surveillée minimisant la consommation énergétique du système climatique.

Ainsi la modification de la température dans la pièce surveillée en période d'inoccupation de cette pièce est limitée à la température en dessous ou au-dessus de laquelle le maintien de cette température aurait des conséquences néfastes sur la consommation énergétique des autres pièces.

Avantageusement, le procédé objet de l'invention comprend les étapes consistant à :
I. obtenir un temps maximum, *tₐₘₐₓ,* admissible pour l'atteinte de la température de confort dans la pièce surveillée depuis la température réduite ;
m. déterminer la température réduite à l'étape g) de sorte que *tₐ* ≤ *tₐₘₐₓ*

Ainsi, le système climatique objet de l'invention adapte sa réactivité en fonction, notamment de la fonction et de l'utilisation de la pièce surveillée.

Selon un mode de réalisation avantageux, le système climatique comprend une connexion à un service de clientèle et un terminal utilisateur également connecté audit service de clientèle, la température de confort et le calendrier d'occupation étant communiqués au système climatique par le terminal utilisateur via sa connexion au service de clientèle. Ainsi, l'utilisateur prévoit à distance les conditions de confort qu'il attend et le système climatique objet de l'invention adapte et anticipe sa réponse en conséquence, non seulement pour la seule pièce surveillée mais pour l'ensemble du local.

L'invention est exposée ci-après selon ses modes de réalisation préférés, nullement limitatifs, et en référence aux figures 1 à 5, dans lesquelles :
- la figure 1 illustre selon une représentation schématique un exemple de réalisation du système climatique objet de l'invention ;
- la figure 2 est un logigramme de principe illustrant les étapes d'implantation du modèle initial et de détermination du modèle adapté et du modèle adapté inverse du procédé objet de l'invention ;
- la figure 3 représente selon un logigramme les étapes d'acquisition d'un calendrier d'occupation et d'inoccupation du local, climatisé par le système climatique objet de l'invention ;
- la figure 4 illustre les étapes de détermination des consignes prises en compte pour la mise en oeuvre du procédé objet de l'invention ;
- et la figure 5 représente schématiquement la mise en oeuvre du procédé objet de l'invention en présence de perturbation des consignes de fonctionnement.

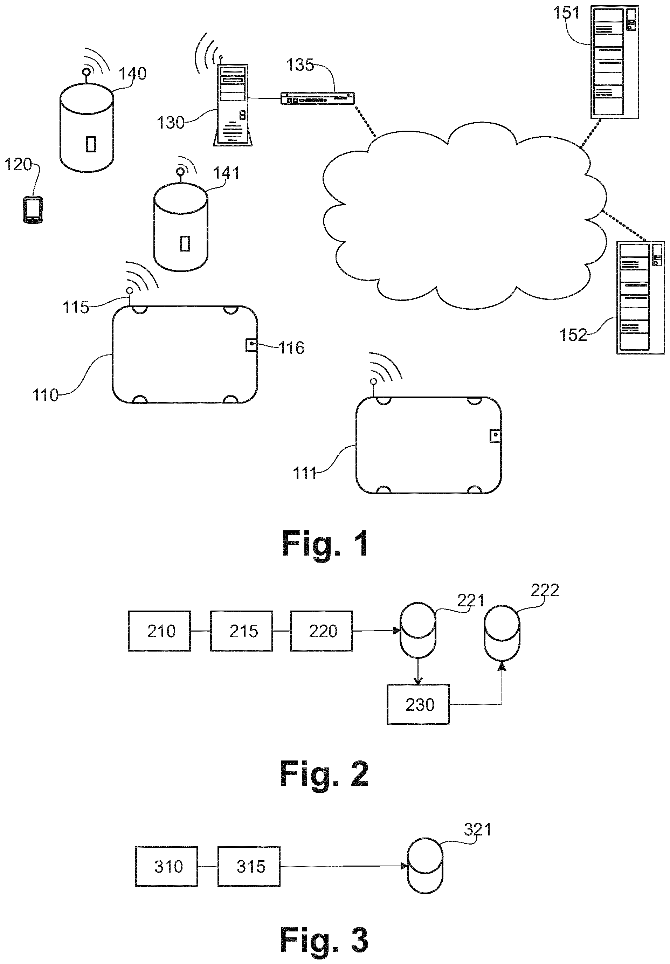

Figure 1, selon un exemple de réalisation, le système climatique objet de l'invention comprend une pluralité d'appareils (110, 111, 140, 141) climatiques. Selon cet exemple particulier, un appareil climatique est un radiateur électrique (110, 111) ou un chauffe-eau (140, 141). Alternativement ou de manière complémentaire, le système climatique objet de l'invention comprend un appareil climatique tel qu'une climatisation, réversible ou non, une ventilation mécanique contrôlée simple ou double flux. Ces appareils climatiques sont répartis dans les différentes pièces d'un local situé dans un bâtiment. À titre d'exemples non limitatifs, le local est un hôtel et les pièces comprennent des chambres, une salle à manger et des salles de conférences, le local est une maison ou un appartement d'habitation et les pièces comprennent les pièces couramment rencontrées dans ce type de locaux, telles que chambre, cuisine, salle de bain, séjour, ou encore, le local comprend tout ou partie d'un bâtiment industriel et comprend des locaux de bureau et des ateliers.

Selon cet exemple de réalisation le système climatique objet de l'invention comprend des moyens (116) de détection de présence dans toutes ou partie des pièces du local. Avantageusement, lesdits moyens de détection de présence sont portés par l'un des appareils climatiques présents dans la pièce surveillée. Selon un exemple de réalisation, le détecteur (116) de présence est un détecteur de mouvements. Les appareils climatiques comprennent des moyens (115) de connexion à un ordinateur (130) permettant la réalisation des calculs pour la mise en oeuvre du procédé objet de l'invention. Lesdits moyens de connexion sont par exemple des moyens de connexion sans fil selon un protocole WiFi® ou tout autre protocole de communication sans fil ou des moyens de connexion filaires par un réseau Ethernet®, par fibre optique ou utilisant des courants porteurs sur les alimentations électriques des appareils (110, 111, 140, 141) climatiques du système climatique objet de l'invention. Chaque appareil climatique est identifié de manière unique sur le réseau informatique ainsi créé. Selon des exemples de réalisation, l'ordinateur (130) est un ordinateur autonome de type PC. Alternativement, l'ordinateur est compris dans une cassette (non représentée) liée à l'un des appareils climatiques du système climatique objet de l'invention. Le choix du mode de réalisation dépend du type de local. Par exemple, si le local est un hôtel, l'ordinateur (130) est préférentiellement, mais non exclusivement un PC autonome, si le local est un appartement particulier, l'ordinateur est préférentiellement intégré à l'un des appareils climatiques.

Selon cet exemple de réalisation, l'ordinateur (130) est connecté à internet via un routeur (135) et communique par ce réseau avec un service (151) de prévision météorologique et un service (152) de clientèle. Selon ce même exemple de réalisation, le système climatique objet de l'invention comprend un terminal (120) utilisateur. À titre d'exemple non limitatif, le terminal (120) utilisateur est un téléphone cellulaire, de type téléphone intelligent ou « *smartphone »,* connecté à internet et pourvu d'une application adaptée lui permettant de dialoguer avec le service (152) de clientèle. Ainsi, plusieurs utilisateurs sont susceptibles d'être en liaison avec le système climatique objet de l'invention par l'intermédiaire d'une telle application.

Figure 2, selon une première étape (210) du procédé objet de l'invention, celle-ci consiste à obtenir un modèle de comportement thermique du local dans lequel est le système climatique objet de l'invention. Selon un exemple de réalisation, ledit modèle initial est un modèle paramétrique générique valable pour tout local ou plus précisément pour tout type de local appartenant à une catégorie prédéfinie donnée. Par exemple, le modèle paramétrique initial est un modèle adapté à une maison d'habitation particulière, ou le modèle paramétrique est un modèle adapté à un local de type hôtel. Ledit modèle paramétrique comprend un grand nombre de facteurs relatif au local et aux pièces qu'il contient. Par exemple, le modèle paramétrique comporte des facteurs relatifs à l'environnement du local, comme sa position géographique, son altitude, l'orientation générale, la nature des murs et de l'isolation thermique, la surface des façades etc... Il comporte des facteurs relatifs à chaque pièce du local comme, la fonction de ladite pièce : salle de bain, chambre etc..., le volume de la pièce, la hauteur de plafond, la surface vitrée des ouvertures, l'orientation, l'identification des pièces voisines, les coefficients d'échange thermique avec les pièces voisines etc... Finalement, le modèle paramétrique comprend des facteurs associés à chaque appareil climatique du système climatique tels que sa nature : climatisation, convecteur, panneau rayonnant, chauffe-eau..., sa puissance installée, son inertie thermique ou ses capacités d'accumulation, la part de puissance dissipée par convection et par rayonnement, la pièce dans laquelle il est installé, sans que ces listes d'exemples ne soient limitatives. Le système climatique comprend en outre :
- une ou plusieurs sondes de température à l'intérieur de toutes ou parties des pièces du local ;
- une ou plusieurs sondes extérieures ;
- un thermostat sur un appareil climatique ou dans une pièce, dans toutes ou partie des pièces du local, permettant à un utilisateur de sélectionner manuellement la température désirée dans un espace donné ;
- des moyens pour acheminer les informations issues des sondes ou du thermostat vers l'ordinateur.

Selon une étape (215) de renseignement du modèle initial, les facteurs connus du modèle sont renseignés lors de la première installation. Une partie de ces facteurs est obtenue directement par dialogue entre l'ordinateur et les appareils climatiques du système climatique, par exemple, la puissance desdits appareils climatiques, leur capacité d'accumulation et la part d'énergie dissipée par convection et par rayonnement. Selon un exemple de réalisation, les appareils climatiques comprennent des moyens de géolocalisation relatifs de sorte que des facteurs tels que la position relative des appareils climatiques est également obtenue automatiquement. Une autre partie des facteurs est renseignée par l'installateur au moment de l'installation du système climatique, il s'agit par exemple du nombre de pièces du local, de la nature des pièces, de leur volume, éventuellement approximatif, des pièces voisines de chaque pièce, de la localisation du logement etc...Tous les autres facteurs qui ne peuvent pas être renseignés par des mesures simples ou la mise en oeuvre d'abaques, prennent des valeurs par défaut. Chaque facteur est susceptible d'évoluer dans un domaine de variation donné, lequel est, de la même manière, défini soit par défaut soit par renseignement du modèle paramétrique.

Le modèle paramétrique et sa mise en oeuvre par le procédé objet de l'invention s'inscrivent dans le domaine des procédé et dispositifs connus sous l'acronyme anglo-saxon « *DDDAS »* pour « *Dynamic Data Driven Applications Systems »* qui permettent le contrôle en temps réel d'une simulation, par exemple par l'intermédiaire de données issues de capteurs, et en retour, la capacité de conduire le système climatique ou le processus générant ces données à partir des résultats de simulation actualisés.

Selon un exemple de réalisation, le modèle paramétrique est piloté par k facteurs *Pi(i=l..k)* évoluant chacun dans un domaine de variation donné lequel domaine est discrétisé en *NPi* valeurs.

Le modèle paramétrique est obtenu sous la forme d'une équation fonctionnelle reliant les réponses cherchées, par exemple la température dans une pièce du local, aux variations de la pluralité de facteurs, pour n'importe quelle combinaison de valeurs desdits facteurs dans leur domaine de variation, sous la forme de *N* modes fonctions des facteurs, chaque mode étant défini pour chacune des *NPi* valeurs discrétisées. Ce mode de réalisation du modèle paramétrique, permet de réaliser une simulation complexe, en contenant l'explosion dimensionnelle par l'intermédiaire de la séparation des variables, en ramenant cette simulation à la détermination de *N* modes, calculés au préalable (*off line*). Ainsi le nombre d'informations à stocker pour le modèle complet est limité à *N.*∑*NPi*

Le modèle paramétrique est obtenu par une méthode dite PGD acronyme de *« Proper Generalized Décomposition* », Cette méthode permet d'identifier ledit modèle paramétrique en partant d'une somme de fonctions séparées, inconnues à priori, et enrichies par une méthode itérative. Cette méthode de résolution permet d'obtenir un compromis optimal entre le nombre de fonctions séparées et la précision du modèle paramétrique. Ainsi, le modèle paramétrique est obtenu à partir de simulations numériques *off line* réalisées sur un calculateur puissant, et la mise en oeuvre de la méthode PGD. Le modèle paramétrique obtenu, réduit en quelque sorte à ses modes propres, est implantable sur un ordinateur de type PC ou sur une carte de calcul intégrée dans un appareil climatique sans perte de précision.

La mise en oeuvre de la méthode PGD est décrite par exemple dans :
FRANCISCO CHINESTA ET AL: « A Short Review on Model Order Reduction Based on Proper Generalized Decomposition", ARCHIVES OF COMPUTATIONAL METHODS IN ENGINEERING STATE OF THE ART REVIEWS, SPRINGER NETHERLANDS, DORDRECHT, vol. 18, no. 4, 11 octobre 2011 (2011-10-11), pages 395-404, ISSN: 1886-1784*.*

Selon un exemple de réalisation, le modèle paramétrique permet de déterminer la température dans chaque pièce et l'énergie consommée par chaque appareil climatique en fonction du temps pour une configuration donnée des facteurs.

Selon une étape (220) d'adaptation, le modèle paramétrique est adapté au local réel. Lorsque le modèle paramétrique a été obtenu par la méthode PGD, cette adaptation consiste essentiellement à réduire la plage de variation des facteurs non contrôlés et non renseignés au cours de l'étape (215) de renseignement, tels que les coefficients d'échange thermique entre les pièces, ceci étant obtenu par un recalage en suivant un protocole d'essai mis en oeuvre par exemple, de jour ou de nuit, en suivant des plans d'expérience déterminés. Ces plans d'expériences consistent en des sollicitations déterminées du système climatique et en des mesures de température, au moyen des sondes installées, et de l'énergie consommée. Lesdits plans d'expérience sont préenregistrés dans l'ordinateur et sont mis en oeuvre de manière automatique.

Le modèle paramétrique adapté (221) est stocké en mémoire.

Selon une étape de calcul (230) partant dudit modèle (221) paramétrique adapté, un modèle (222), dit modèle inverse, permettant de calculer le temps pour atteindre une température dans une pièce, et l'énergie dépensée, est calculé et stocké en mémoire.

Figure 3, selon un exemple de mise en oeuvre, le procédé objet de l'invention comprend une étape (310) d'acquisition d'un calendrier fixe d'occupation ou d'inoccupation d'une pièce. Ledit calendrier est par exemple déterminé pour chaque pièce et comprend des périodes prédéterminées dans lesquelles lesdites pièces ne sont pas occupées. Par exemple, il s'agit des heures de fermeture d'un local industriel ou commercial, de la nuit dans des pièces comme une cuisine pour un local d'habitation, ou encore d'une plage horaire durant laquelle la mise à disposition des chambres ne sont pas admises dans un hôtel. Ces informations sont entrées en mémoire du système climatique par un utilisateur disposant des droits adéquats, par exemple au moyen du terminal et de son application. Selon une étape (315) de collecte, le calendrier obtenu lors de l'étape d'acquisition est complété par des informations prévisibles, mais non répétitives. À titre d'exemple, lorsque le local est un hôtel, un usager réservant sa chambre au moyen d'une application mobile renseigne ses heures approximatives d'arrivée et de départ, ces heures correspondant à une plage d'occupation de la chambre qui lui sera attribuée, sont intégrées au calendrier. Le calendrier (321) prédéterminé est ainsi stocké en mémoire. Ce calendrier (321), pour autant, n'est pas figé et évolue en fonction de la connaissance anticipée des événements prévisibles.

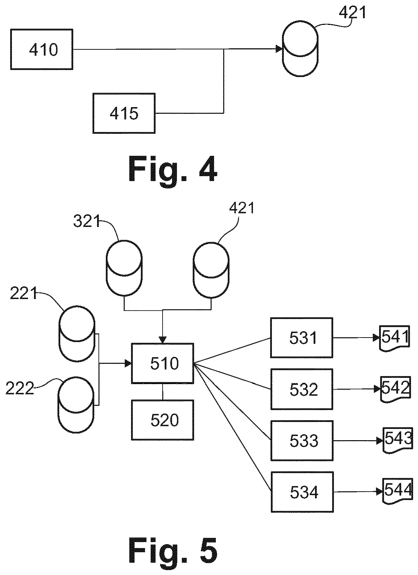

Figure 4, les consignes de températures par défaut sont également enregistrées en mémoire. Lesdites consignes par défaut comportent au moins, pour chaque pièce du local, une consigne de température de confort, par exemple 20° C, et une consigne de température réduite, laquelle température réduite est supérieure ou inférieure à la température de confort. Par exemple, si le système climatique est essentiellement un système de chauffage, la température réduite par défaut est de l'ordre de 15° C. Si le système climatique est un système de climatisation installé dans un pays chaud, la température réduite est par défaut de l'ordre de 25° C. Selon des exemples de réalisation, le système climatique comprend plusieurs températures de confort et températures réduites par défaut, ainsi, à titre d'exemples non limitatifs, les températures de confort et réduites comportent des valeurs différentes selon les saisons, ou encore elles comportent des températures réduites correspondant à des périodes longues d'inoccupation comme par exemple, une température réduite dite hors gel. Ainsi, selon un exemple de réalisation, le procédé objet de l'invention comprend une étape (410) d'enregistrement des températures de consigne valables à long terme. Cette étape (410) est complétée par une étape (415) d'enregistrement des températures de consigne prévisibles mais valables à court terme. Par exemple, en reprenant l'exemple de la réservation d'une chambre d'hôtel, l'utilisateur spécifie dans l'application la température désirée au moment de son arrivée, et cette valeur prend la place de la température de confort par défaut pour la plage d'occupation correspondante. Lesdites températures de consigne prévisibles et par défaut à long terme et à court terme sont enregistrées en mémoire dans un fichier (421) non figé.

Figure 5, selon un premier exemple de mise en oeuvre et de fonctionnement du système climatique objet de l'invention, les informations enregistrées dans le calendrier (321) et les informations enregistrées dans le fichier de consignes (421) sont rapprochées. Dans une étape de calcul (510), le modèle inverse (222) est utilisé pour calculer le temps, nécessaire pour atteindre les consignes de température visées aux dates et heures définies, et le modèle adapté (221) est utilisé pour piloter de manière optimale l'ensemble du système climatique, c'est-à-dire définir le taux de charge de chacun des appareils climatiques, pour maintenir une température conforme aux consignes en vigueur dans chaque pièce du local. Naturellement d'autres optimisations sont possibles. À cette fin, l'utilisateur, disposant des droits adéquats, définit dans une application adaptée les consignes strictes, sur lesquelles aucune divergence sensible n'est possible, et les consignes plus lâches sur lesquelles une tolérance plus ou moins importante est admise. Il définit également le ou les paramètres de sorties qui doivent être optimisés, comme la consommation énergétique ou la réactivité du système climatique à des perturbations extérieures. Dans une étape de commande (520), l'ordinateur transmet les ordres correspondant aux calculs réalisés aux appareils climatiques du système climatique. Par exemple une pièce inoccupée est à une température T1 correspondant à une consigne de température réduite, et est prévue d'être occupée à une date ultérieure, *t*, avec une consigne de température de confort T2, le système climatique objet de l'invention calcule le temps *tₐ* nécessaire pour atteindre la température T2 en fonction des conditions de régulation de température prévisibles à la date *t*, et calcule un taux de charge des moyens climatiques compris dans la pièce surveillée, mais aussi si nécessaire, dans les pièces adjacentes, pour atteindre la température T2 dans la pièce surveillée au temps *t.* Arrivé au temps *(t-tₐ)*, l'ordinateur met en oeuvre le taux de charge ainsi calculé sur les appareils climatiques appropriés pour atteindre la température T2 à la date *t*.

Dans le cas où les modèles ont été obtenus par la méthode PGD, les temps de calcul pour la mise en oeuvre des modèles sont réduits. Ainsi, en 2016, un modèle comprenant 200 facteurs susceptibles d'évoluer chacun selon une centaine de modalités s'exécute en moins de 0,1 secondes sur un microprocesseur de type « *Intel Core i7*® *».*

L'ordinateur étant connecté à un service de météorologie, celui-ci fait l'acquisition des prévisions météorologiques auprès dudit service et conditionne les modèles en conséquence, en modifiant des facteurs compris dans le modèle adapté et le modèle inverse, tels que la puissance d'ensoleillement reçue par le bâtiment comprenant le local, la température extérieure, la vitesse et la direction du vent etc...

La rapidité d'exécution du modèle permet ainsi de calculer par avance les évolutions du taux de charge, par exemple pour les prochaines 24 heures et ainsi d'anticiper un profil de mise en charge ou de décharge optimal du système climatique. Ainsi les informations météorologiques sont prises en compte dans le calcul de *tₐ* et du taux de charge correspondant.

Alternativement ou de manière complémentaire, l'utilisateur, disposant des droits appropriés, définit un délai *tₐₘₐₓ* maximum pour atteindre la température de confort dans une pièce donnée. Dans ce cas, selon l'exemple précédent, le système climatique modifie si nécessaire la consigne de température réduite de sorte que la température de confort soit toujours atteinte dans un délai inférieur ou égal à *tₐₘₐₓ*.

En plus de ces modes courants de fonctionnement, basés sur le calendrier prévisible, le système climatique objet de l'invention est apte à réagir à une perturbation (531, 532, 533, 534) intervenant dans une pièce. Une telle perturbation est par exemple constituée par :
- une modification (531) de la température de consigne dans ladite pièce, par exemple au moyen du thermostat ;
- une modification (532) des conditions thermiques de la pièce et de la disponibilité des appareils climatiques dans ladite pièce, par exemple, par l'ouverture d'une fenêtre, celle-ci entraînant automatiquement la coupure d'alimentation d'au moins une partie des appareils climatiques compris dans la même pièce ;
- un délestage (533) ;
- une modification (534) imprévue des conditions d'occupation de ladite pièce, soit par la détection d'une présence à une période d'inoccupation enregistrée dans le fichier (421), soit par l'absence de détection de présence à une période d'occupation enregistrée dans le fichier (421).

Ces perturbations, ont pour effet soit de modifier (531, 534) la température de consigne, soit de modifier (532, 533) la puissance disponible pour la régulation climatique, ou encore de modifier (532) les conditions thermiques de fonctionnement du système climatique.

Ces informations sont relayées vers l'ordinateur et stockées dans des mémoires temporaires (541, 542, 543, 544). La perturbation n'est prise en compte que si elle perdure au-delà d'un temps critique, de sorte à éviter des fluctuations aléatoires.

Si la durée de la perturbation est supérieure à une durée critique, alors l'ordinateur calcule un nouveau taux de charge pour tenir compte des modifications introduites par ces perturbations.

Dans le cas d'une perturbation liée à un délestage (533) ou à des conditions imprévues d'occupation des locaux, le système climatique conserve un historique de ces perturbations incluant la date d'occurrence et la durée de ladite perturbation.

À intervalle réguliers, par exemple tous les mois, un module de calcul statistique analyse ces données afin d'y rechercher une éventuelle récurrence. Lorsqu'une telle récurrence est identifiée, lesdites perturbations sont enregistrées comme des événements prévisibles dans calendrier (321) et sont alors de fait anticipée et traitées comme telles.

La description ci-avant et les exemples de réalisation, montrent que l'invention atteint le but visé, à savoir, qu'elle permet, par l'identification et l'utilisation d'un modèle de comportement d'un local, de piloter en synergie l'ensemble des moyens d'un système climatique de sorte à répondre à des objectifs de confort et de performance énergétique et à des perturbations des conditions d'occupation du local et de fonctionnement du système climatique.

## Revendications

1. Procédé pour la régulation thermique, en regard d'une consigne de température, d'un système climatique comprenant une pluralité d'appareils climatiques (110, 111, 140, 141) dans un local comprenant plusieurs pièces, en présence d'une modification de la consigne de température dans l'une desdites pièces,
ledit procédé comprenant les étapes consistant à :
a. obtenir (210) un premier modèle de comportement thermique du local, dit modèle initial ;
b. adapter (220) le modèle initial au comportement thermique effectif du local en analysant la réponse à une sollicitation du système climatique, pour obtenir un deuxième modèle, dit modèle adapté (221) ;
c. calculer, à partir du modèle adapté, la variation de température dans chaque pièce en fonction de la modification (531, 532, 533, 534) des conditions de fonctionnement d'un des appareils climatiques du système climatique ;
d. déduire (510) de l'étape c) les conditions de charge de chaque appareil climatique du système climatique pour répondre à la modification de consigne de température dans la pièce du local ;
e. appliquer (520) les taux de charge déterminés à l'étape d) à chaque appareil climatique du système climatique ;
**caractérisé en ce que** :
- le système climatique comprend des moyens (116) de détection de présence dans une des pièces du local, dite pièce surveillée, et un module de calcul ; et
- le procédé comporte en outre les étapes consistant à :
f. obtenir (310, 315) un calendrier (321) d'occupation et d'inoccupation de la pièce surveillée et des première et seconde températures de consigne, la seconde température de consigne correspondant, pour le système climatique, à une consommation énergétique plus faible que la première température de consigne ;
g. modifier la température dans la pièce surveillée en appliquant les étapes d) et e) à ladite pièce surveillée avec une consigne de température correspondant à la seconde température de consigne au début d'une période d'inoccupation de ladite pièce ;
h. calculer (230), à partir du modèle adapté (221), un troisième modèle dit modèle adapté inverse (222) permettant de calculer un temps pour atteindre une température dans une pièce ; et déterminer, à partir dudit modèle adapté inverse, le temps, noté *tₐ,* nécessaire pour atteindre la première température de consigne dans la pièce surveillée ;
i. appliquer les étapes d) et c) à l'instant précédent de *tₐ* la date d'occupation de la pièce, avec la première température de consigne comme température de consigne.

2. Procédé selon la revendication 1, dans lequel le calendrier obtenu à l'étape f) comporte un calendrier prédéterminé et un calendrier obtenu par apprentissage à partir des informations délivrées par les moyens de détection de présence dans la pièce surveillée.

3. Procédé selon la revendication 1, dans lequel les moyens de détection de présence comprennent, seuls ou en combinaison, un détecteur de mouvement, un détecteur CO₂, un capteur sonore, un capteur de vibration, une caméra numérique, un bouton d'indication de présence.

4. Procédé selon la revendication 1, dans lequel le système climatique comprend des moyens de connexion à un service (151) de météorologie et comprend les étapes consistant à :
j. obtenir une prévision météorologique ; et dans lequel l'étape b) comprend la prise en compte de l'information obtenue à l'étape j).

5. Procédé selon la revendication 4, dans lequel les étapes h) et i) comprennent la prise en compte de l'évolution des conditions météorologiques définies à l'étape j).

6. Procédé selon la revendication 1, dans lequel le modèle initial et le modèle adapté comprennent le calcul de la consommation énergétique du système climatique, et qu'il comprend une étape consistant à :
k. calculer une température réduite pour la pièce surveillée minimisant la consommation énergétique du système climatique.

7. Procédé selon la revendication 1, comprenant les étapes consistant à :
I. obtenir un temps maximum, *tₐₘₐₓ*, admissible pour l'atteinte de la température de confort dans la pièce surveillée depuis la température réduite ;
m. déterminer la température réduite à l'étape g) de sorte que *tₐ* ≤ *tₐₘₐₓ*.

8. Procédé selon la revendication 2, dans lequel le système climatique comprend une connexion à un service (152) de clientèle et un terminal (120) utilisateur également connecté audit service de clientèle, la première température de consigne et le calendrier d'occupation étant communiqués au système climatique par le terminal utilisateur via sa connexion au service de clientèle.

## Patentansprüche

1. Verfahren zur Wärmeregulation in Bezug auf eine Solltemperatur einer Klimaanlage, umfassend eine Mehrzahl Klimakontrollgeräte (110, 111, 140, 141) in einem mehrere Zimmer umfassenden Gebäude bei einer Änderung der Solltemperatur in einem der Zimmer,
wobei das Verfahren die Schritte umfasst:
a. Einholen (210) eines ersten Temperaturverhaltensmodells des Gebäudes ("Ausgangsmodell");
b. Anpassen (220) des Ausgangsmodells an das Ist-Temperaturverhalten des Gebäudes durch Auswerten der Reaktion auf eine Beanspruchung der Klimaanlage, um ein zweites Modell ("angepasstes Modell") zu erhalten (221);
c. Berechnen der Temperaturschwankungen in jedem Zimmer als Funktion der Änderung (531, 532, 533, 534) der Betriebsbedingungen eines der Klimakontrollgeräte der Klimaanlage anhand des angepassten Modells;
d. Schließen (510) aus dem Schritt c) auf die Lastbedingungen jedes Klimakontrollgeräts der Klimaanlage, um auf die Veränderung der Solltemperatur im Zimmer des Gebäudes zu reagieren;
e. Anwenden (520) der im Schritt d) ermittelten Lastzahlen auf jedes Klimakontrollgerät der Klimaanlage;
**dadurch gekennzeichnet, dass**:
- die Klimaanlage Mittel (116) zur Anwesenheitserkennung in einem der Zimmer des Gebäudes ("überwachtes Zimmer") und ein Rechenmodul umfasst;
- das Verfahren ferner die Schritte umfasst:
f. Einholen (310, 315) eines Belegungskalenders (321) des überwachten Zimmers und der ersten und zweiten Solltemperaturen, wobei die zweite Solltemperatur einem geringeren Energieverbrauch der Klimaanlage entspricht als die erste Solltemperatur;
g. Ändern der Temperatur im überwachten Zimmer unter Anwendung der Schritte d) und e) auf das überwachte Zimmer mit einer Solltemperatur, die der zweiten Solltemperatur am Anfang eines Zeitraums, in dem das Zimmer nicht belegt ist, entspricht;
h. Berechnen (230) eines dritten Modells ("umgekehrtes angepasstes Modell") (222) anhand des angepassten Modells (221), das die Berechnung einer Zeit zum Erreichen einer Temperatur in einem Zimmer ermöglicht, und Ermitteln der zum Erreichen der ersten Solltemperatur im überwachten Zimmer erforderlichen Zeit *tₐ* anhand des umgekehrten angepassten Modells;
i. Anwenden der Schritte d) und c) auf den Moment, dem Belegungsdatum des Zimmers um *tₐ* vorausgehend, mit der ersten Solltemperatur als Solltemperatur.

2. Verfahren nach Anspruch 1, wobei der im Schritt f) eingeholte Kalender einen vorgegebenen Kalender und einen durch Lernen der von den Anwesenheitserkennungsmitteln im überwachten Zimmer gelieferten Daten erstellten Kalender umfasst.

3. Verfahren nach Anspruch 1, wobei die Anwesenheitserkennungsmittel einen Bewegungsmelder, einen CO₂-Sensor, einen Akustiksensor, einen Vibrationssensor, eine digitale Kamera, eine Präsenztaste oder eine Kombination davon umfassen.

4. Verfahren nach Anspruch 1, wobei die Klimaanlage Mittel zur Verbindung mit einem Wetterdienst (151) umfasst und das Verfahren folgende Schritte umfasst:
j. Einholen einer Wettervorhersage und
wobei der Schritt b) das Berücksichtigen der im Schritt j) erhaltenen Informationen umfasst.

5. Verfahren nach Anspruch 4, wobei die Schritte h) und i) umfassen: Berücksichtigen der Entwicklung der im Schritt j) definierten Wetterbedingungen.

6. Verfahren nach Anspruch 1, wobei das Ausgangsmodell und das angepasste Modell eine Berechnung des Energieverbrauchs der Klimaanlage umfassen, und wobei das Verfahren den Schritt umfasst:
k. Berechnen einer reduzierten Temperatur für das überwachte Zimmer unter Minimierung des Energieverbrauchs der Klimaanlage.

7. Verfahren nach Anspruch 1, umfassend die Schritte:
I. Einholen einer maximalen Dauer *tₐₘₐₓ,* die zulässig ist, um ausgehend von der reduzierten Temperatur die Komfort-Temperatur im überwachten Zimmer zu erreichen;
m. Bestimmen der reduzierten Temperatur aus Schritt g), sodass *tₐ* ≤ *tₐₘₐₓ*.

8. Verfahren nach Anspruch 2, wobei die Klimaanlage eine Verbindung mit einem Kundendienst (152) und ein ebenfalls mit dem Kundendienst verbundenes Benutzerendgerät (120) umfasst, wobei die erste Solltemperatur und der Belegungskalender der Klimaanlage durch das Benutzerendgerät über die Verbindung mit dem Kundendienst mitgeteilt werden.

## Claims

1. A method for the temperature control, in light of the temperature setpoint, of a climate system comprising a plurality of climate devices (110, 111, 140, 141) of a premises comprising several rooms, in the presence of a change to the temperature setpoint in one of said rooms,
said method comprising the following steps:
a. obtaining (210) a first temperature behavior model of the premises, called initial model;
b. adapting (220) the initial model to the actual temperature behavior of the premises by analyzing the response to a solicitation of the climate system, to obtain a second model, called adapted model (221);
c. calculating, from the adapted model, the temperature variation in each room based on the modification (531, 532, 533, 534) of the operating conditions of one of the climate devices of the climate system;
d. deducing (510), from step c), the load conditions of each climate device of the climate system to respond to the temperature setpoint modification in the room of the premises;
e. applying (520) the load rates determined in step d) to each climate device of the climate system;
**characterized in that**:
- the climate system comprises presence detection means (116) in one of the rooms of the premises, called monitored room, and a computing module; and
- the method further includes the steps consisting of:
f. obtaining (310, 315) an occupancy and non-occupancy calendar (321) of the monitored room and first and second setpoint temperatures, the second setpoint temperature corresponding, for the climate system, to a lower energy consumption than the first setpoint temperature;
g. changing the temperature in the monitored room by applying steps d) and e) to said monitored room with a temperature setpoint corresponding to the second temperature setpoint at the beginning of a non-occupancy period of said room;
h. computing (230), from the adapted model (221), a third model called inverse adapted model (222) making it possible to compute a time to reach a temperature in a room; and determining, from said inverse adapted model, the time, denoted *tₐ*, needed to reach the first setpoint temperature in the monitored room;
i. applying steps d) and c) at the moment preceding, by *tₐ*, the occupancy date of the room, with the first setpoint temperature as the setpoint temperature.

2. The method according to claim 1, wherein the calendar obtained in step f) includes a predetermined calendar and a calendar obtained by learning from information delivered by the presence detection means in the monitored room.

3. The method according to claim 1, wherein the presence detection means comprise, alone or in combination, a motion detector, a CO₂ detector, a sound sensor, a vibration sensor, a digital camera, a presence indication button.

4. The method according to claim 1, wherein the climate system comprises means for connection to a weather service (151) and comprises the following steps:
j. obtaining a weather forecast; and wherein step b) comprises taking the information obtained in step j) into account.

5. The method according to claim 4, wherein steps h) and i) comprise taking into account the evolution in the weather conditions defined in step j).

6. The method according to claim 1, wherein the initial model and the adapted model comprise computing the energy consumption of the weather system, wherein the method comprises a step consisting of:
k. computing a reduced temperature for the monitored room minimizing the energy consumption of the weather system.

7. The method according to claim 1, comprising the following steps:
I. obtaining a maximum acceptable time, *tₐₘₐₓ,* to reach the comfort temperature in the monitored room from the reduced temperature;
m. determining the reduced temperature in step g) such that *tₐ* ≤ *tₐₘₐₓ*.

8. The method according to claim 2, wherein the climate system comprises a connection to a customer service line (152) and a user terminal (120) also connected to said customer service line, the first setpoint temperature and the occupancy calendar being communicated to the climate system by the user terminal via its connection to the customer service line.
